# EUROPEAN PATENT APPLICATION

(11) **EP 3 279 119 A1**
(43) Date of publication of application: **07.02.2018**
(21) Application number: 16183078.1
(22) Date of filing: 05.08.2016
(51) Int. Cl.: B65G 49/06, B65G 1/10

(54) **STORAGE UNIT FOR MATERIALS IN SHEET FORM**

(71) Applicant: Emmesse Societa' a Responsabilita' Limitata Semplificata, 21052 Busto Arsizio (VA) (IT)
(72) Inventor: SCHIAVO, Michele, 21017 SAMARATE VA (IT)
(74) Representative: Modiano, Micaela Nadia

(57) **Abstract**

A storage unit for materials in sheet form, comprising at least one slider for supporting a sheet of material in sheet form, the slider comprising a supporting frame, its particularity residing in that the supporting frame is adapted to be moved by a movement system comprising at least one recirculating roller or ball bearing sliding block, the movement system being tipping-resistant.

## Description

The present invention relates to a storage unit for materials in sheet form. Particularly, the invention relates to a storage unit for storing material in sheet form in a vertical position, such as glass, wood, marble, plastic materials, etc.

As is known, storage units for storing in a vertical position material in sheet form such as glass, wood, marble, plastic materials and the like are characterized by frames supported on wheels, known as sliders, which move laterally on guides.

In order to ensure the stability of the slider, the wheels are arranged at the end of the frame, as far apart as possible, and the slider is further provided with a tipping-resistant device constituted by a bearing or a wheel located within a guide that is substantially shaped like a double T and above which the above mentioned wheels move.

In order to maximize the number of sliders with which it is possible to constitute the storage unit, within a given space, the size of the resting surface of the material together with the size of the structure of the frame of the slider must be equal to the width of the portion of the frame that accommodates the above-cited wheels.

The size of the resting surface is determined by the type of material that one wishes to store, while the size of the frame is linked to the structural limit of such frame, which must withstand the weight of the material to be stored and is therefore a function of the height of the resting surface of the material on the frame.

The greater the distance between the wheels, the greater is therefore the stability of the slider during its movement.

The technical solution cited above has limitations, since when it is necessary to provide a storage unit with a very low resting level of the material, for example less than 90 mm, it is necessary to reduce at the same time the diameter of the wheels and therefore reduce the center distance. This is due to the fact that the level of the resting surface of the material, together with the level of the width of the frame, must be equal to the level of the part of the frame that supports the wheels, as mentioned earlier.

By therefore reducing the width of the resting portion of the material, the width of the portion of frame that accommodates the wheels is reduced and it is necessary to reduce the diameter of such wheels.

The effect of this is the fact that the slider is very unstable during its movement, with energetic oscillations.

Moreover, the technical solutions cited above do not allow the slider to be perfectly aligned and there are also difficulties in storing material with a very short resting surface.

Moreover, the presence of the wheels with their diameter causes the material to be arranged at a significant height with respect to the ground. This of course entails once again oscillations and imbalances of the slider.

The aim of the present invention is to provide a storage unit for materials in sheet form in which the oscillations of the individual sliders are reduced to the minimum possible extent.

Within this aim, an object of the present invention is to provide a storage unit for materials in sheet form that has a higher stability than storage units of the known type.

Another object of the present invention is to provide a storage unit for materials in sheet form that has a greater movement stability and greater constructive simplicity.

Another object of the present invention is to provide a storage unit for materials in sheet form in which the height at which the materials in sheet form are located with respect to the ground is lower than what occurs with storage units of the known type.

Another object of the present invention is to provide a storage unit for materials in sheet form that has a smaller quantity of components subject to wear.

Another object of the present invention is to provide a storage unit for materials in sheet form in which the slider has a lower overall height, with consequent advantage in transport on trucks and/or containers.

Another object of the present invention is to provide a storage unit for materials in sheet form that is highly reliable, relatively simple to provide and at competitive costs.

This aim, as well as these and other objects that will become better apparent hereinafter, are achieved by a storage unit for materials in sheet form, comprising at least one slider for supporting a sheet of material in sheet form, said slider comprising a supporting frame, characterized in that said supporting frame is adapted to be moved by a movement system comprising at least one recirculating roller or ball bearing sliding block, said movement system being tipping-resistant.

Further characteristics and advantages of the invention will become better apparent from the description of a preferred but not exclusive embodiment of the storage unit according to the present invention, illustrated by way of nonlimiting example in the accompanying figures, wherein:
Figure 1 is a perspective view of a slider constituting the storage unit according to the invention;

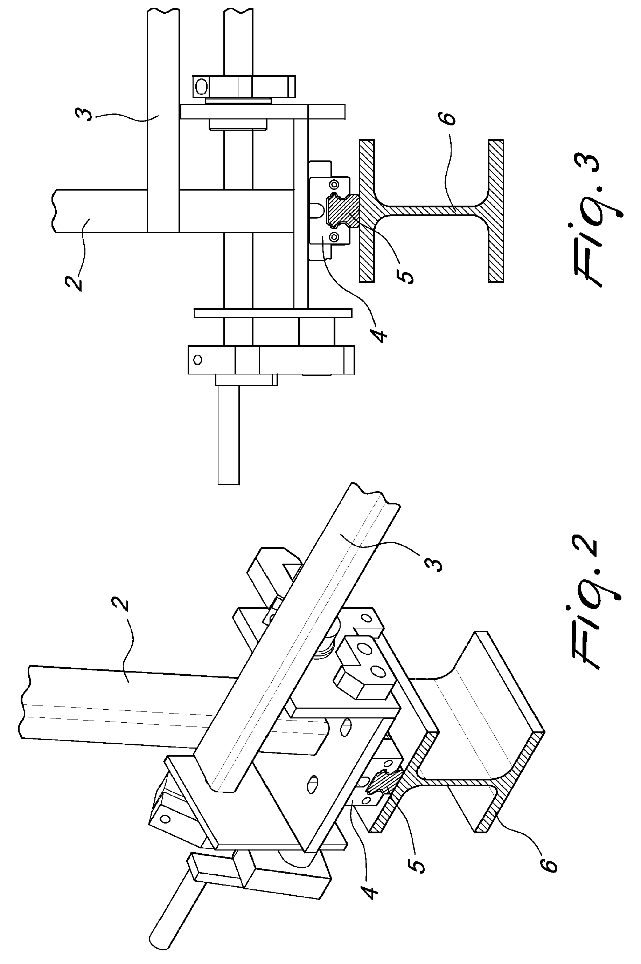

Figure 2 is a perspective view of a detail of the slider of the storage unit according to the present invention;
Figure 3 is a front view of the detail of Figure 2;
Figure 4 is a perspective view of a constructive variation of the slider according to the present invention;
Figure 5 is a front view of the constructive variation shown in Figure 4;

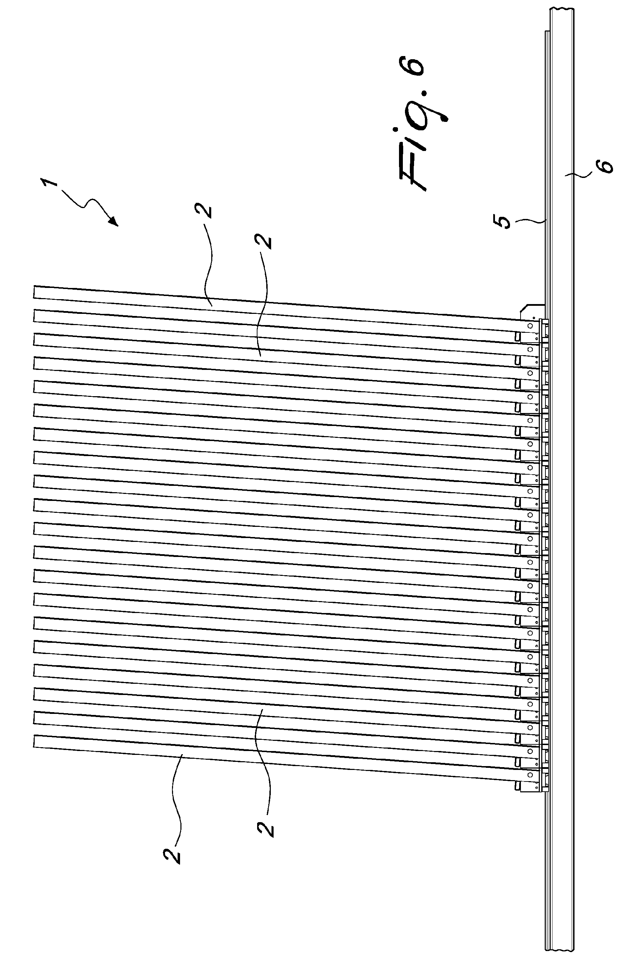

Figure 6 is a side view of a plurality of sliders constituting the storage unit according to the present invention.

With reference to the figures, the storage unit according to the invention, designated generally by the reference numeral 1, comprises at least one and preferably multiple sliders or supporting elements, each of which is provided with a supporting frame 2 provided with a resting surface 3 for the material in sheet form. The supporting frame 2 is adapted to be moved by a movement system which comprises at least one sliding block 4 with recirculating ball bearings (or with a linear technology based on recirculation of balls, rollers and needle rollers, or in any case any other linear tipping-resistant movement system), which engages on a rail 5 formed on a support 6 which rests on the floor.

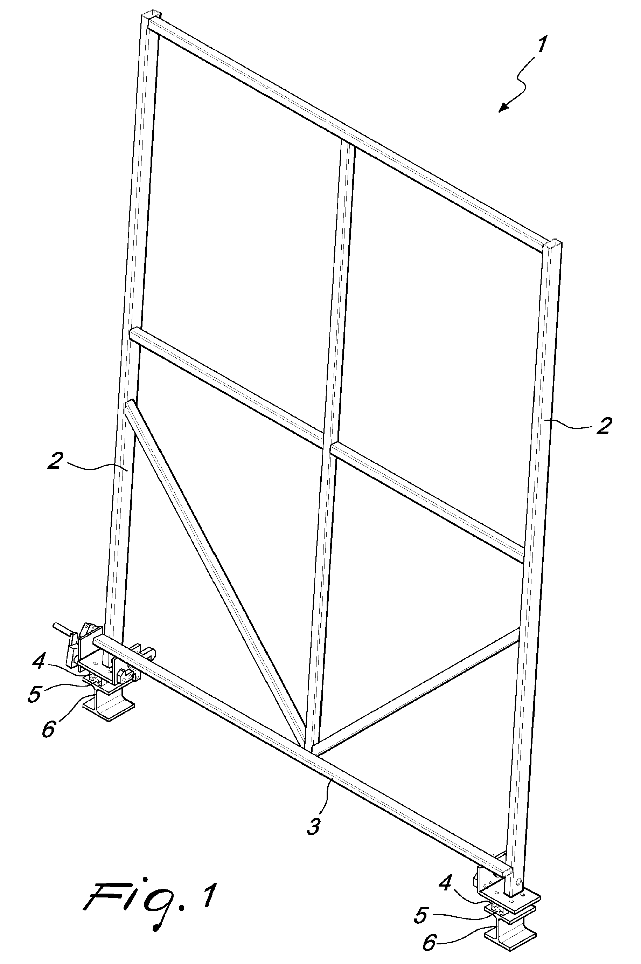

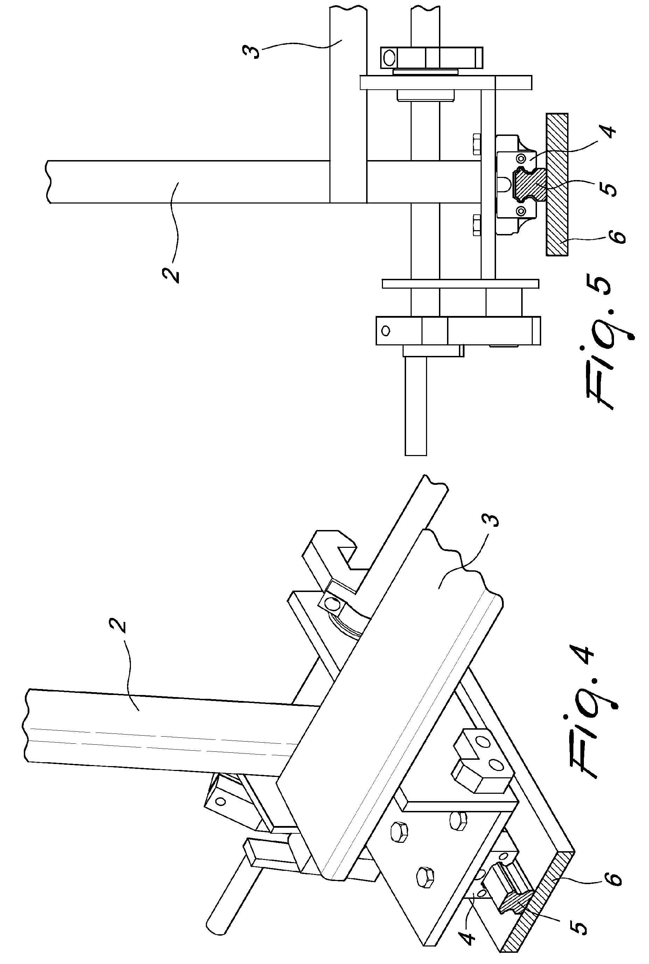

Advantageously, in the invention the support 6 can be provided as shown in Figure 1 or as shown in Figures 4 and 5, in which such support is platelike.

Therefore, the supporting structure or frame of the slider is moved by means of a linear recirculating roller or ball bearing and a corresponding rail-like guide 5.

The solution proposed above allows to provide gliding of the system by means of the balls inside it and at the same time to provide a system that is inherently tipping-resistant due to the profile of the guide 5.

The system described above is very compact and very rigid on all Cartesian axes and therefore ensures high gliding and smoothness of motion while keeping the system rigid and therefore eliminating completely the oscillations of the load during movement.

The storage unit thus provided is constructively very simple, with evident economic advantages. The number of components used is smaller than the number of components used in storage units of the known type and accordingly the number of components that can be subject to wear is also smaller.

Assembly times and manufacturing times are also reduced with respect to solutions of the known type.

The minimum space occupation of the slider is given by the length of the sliding block 4, which is sized according to the weight of the material to be stored on the resting surface 3.

It is also possible to provide for the engagement of two sliding blocks 4 per side.

Furthermore, the guide and the corresponding sliding block have a lower height than the wheel system as regards the background art. This entails a great advantage in the case of installations in locations with a low ceiling, where the height from the ground of the sheet of material in sheet form has a fundamental role. Lifting and picking up the material in sheet form from the storage unit in fact requires a crane or bridge crane lifting system, using suckers, and therefore the lower the material in sheet form is with respect to the ground the more space there is for the lifting means arranged above.

Furthermore, the sliding block and guide system, by being more rigid and precise than the solution with wheels, allow to have a perfectly parallel mutual arrangement of the various sliders that constitute the storage unit.

Therefore, it is possible to provide sliders that are closer to each other than what was possible with respect to storage unit solutions with sliders with wheels.

In practice it has been found that the storage unit according to the present invention achieves fully the intended aim and objects, since it allows to have sliders that are provided precisely and rigidly, without unwanted oscillations, and with an arrangement of sliders that are mutually closer than is possible with the background art.

The storage unit thus conceived is susceptible of numerous modifications and variations, all of which are within the scope of the appended claims. All the details may furthermore be replaced with other technically equivalent elements.

In practice, the materials used, as well as the contingent shapes and dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A storage unit (1) for materials in sheet form, comprising at least one slider (2, 3) for supporting a sheet of material in sheet form, said slider comprising a supporting frame (2), **characterized in that** said supporting frame (2) is adapted to be moved by a movement system comprising at least one recirculating roller or ball bearing sliding block (4) and a corresponding guide (5), said movement system being tipping-resistant.

2. The storage unit according to claim 1, **characterized in that** said guide (5) is adapted to be rested on a supporting element (6).

3. The storage unit according to claim 1, **characterized in that** said supporting frame (2) is moved by a pair of recirculating roller or ball bearing sliding blocks (4).

4. The storage unit according to one or more of the preceding claims, **characterized in that** it comprises a plurality of sliders (2, 3) for supporting material in sheet form.

5. The storage unit according to one or more of the preceding claims, **characterized in that** said plurality of sliders (2, 3) for supporting material in sheet form are adapted to be arranged mutually side by side.
